# EUROPEAN PATENT APPLICATION

(11) **EP 4 807 208 A1**
(43) Date of publication of application: **16.09.2026**
(21) Application number: 26157205.1
(22) Date of filing: 09.02.2026
(51) Int. Cl.: F16D 65/00, B61H 1/00, F16D 65/06, F16D 69/04, B60T 1/04

(54) **RAILWAY BRAKING DEVICE, RAILWAY BRAKE SHOE, AND RAILWAY SHOE HEAD**

(30) Priority: 12.03.2025 JP 2025039003
(71) Applicant: Nabtesco Corporation, Tokyo 102-0093 (JP)
(72) Inventor: Watanabe, Keisuke, Tokyo, 102-0093 (JP); Katsuda, Tadashi, Tokyo, 102-0093 (JP)
(74) Representative: Grünecker Patent- und Rechtsanwälte PartG mbB

(57) **Abstract**

The present invention relates to a railway braking device (1) for braking a wheel (2) having a wheel tread formed on an outer peripheral surface thereof. The railway braking device includes a brake shoe (10) having a friction surface configured to be pressed against the wheel tread; and a shoe head (20) supporting the brake shoe and having a recess (22, 23, 24). The brake shoe has a projection (12, 13, 14) that fits into the recess. A vibration isolating material (31, 32, 33, 34, 35, 36) is provided between the recess and the projection in a region where the recess and the projection overlap when viewed from a direction intersecting a radial direction of the wheel.

## Description

### TECHNICAL FIELD

The present invention relates to a railway braking device, a railway brake shoe, and a railway shoe head.

### BACKGROUND

Conventionally, railway brake shoes (vehicle brake shoes) are known that brake wheels by rubbing against the wheel tread. For example, Patent Literature 1 discloses a railway brake shoe mounted on a shoe head (holder). The railway brake shoe includes a friction material (sliding material body), a vibration isolating material, and a backing plate (backing metal), arranged in order from the portion that comes into sliding contact with the wheel tread. The vibration isolating material (anti-vibration pad) is disposed on the rear surface of the backing plate of the vehicle brake shoe.

### RELEVANT REFERENCES

### LIST OF RELEVANT PATENT LITERATURE

Patent Literature 1: Japanese Patent Application Publication No. 2018-179211

### SUMMARY

In railway vehicles, particularly those operating in metropolitan areas, there is a requirement to reduce brake squeal of railway braking devices (brakes). However, when high-friction brake shoes are employed in order to enhance braking force in preparation for rainy weather and similar conditions, brake squeal is more likely to occur.

Brake squeal is generated by vibration. In order to prevent the occurrence of vibration, the vibration isolating material is sometimes disposed in railway braking devices. In recent years, further reduction of brake squeal has been desired. For this reason, it has been required to dispose the vibration isolating material at a more effective position or arrangement. However, in the arrangement of the vibration isolating material in the above-described conventional art, the effect of reducing the brake squeal was limited.

The present invention provides a railway braking device, a railway brake shoe, and a railway shoe head, in which the vibration isolating material is disposed at an effective position so that the noise of the railway braking device can be further reduced.

One aspect of the invention provides a railway braking device for braking a wheel having a wheel tread formed on an outer peripheral surface thereof. The railway braking device includes: a brake shoe having a friction surface configured to be pressed against the wheel tread; and a shoe head supporting the brake shoe and having a recess. The brake shoe has a projection that fits into the recess, and a vibration isolating material is provided between the recess and the projection in a region where the recess and the projection overlap when viewed from a direction intersecting a radial direction of the wheel.

With this configuration, vibration of the shoe head and the brake shoe in the directions intersecting the radial direction of the wheel, in other words, in the rotational-axis direction and the rotational direction of the wheel, can be absorbed by utilizing the inner surface of the recess and the outer surface of the projection. Conventional vibration isolating materials could absorb only vibration in the radial direction, and therefore had limitations in noise reduction. Whereas the vibration isolating materials of the embodiment can absorb vibration, for example, in the rotational-axis direction and the rotational direction of the wheel. Thus, vibration in all directions can be absorbed. Consequently, noise generated by the railway braking device can be further reduced.

In the above configuration, the vibration isolating material is disposed between the recess and the projection in the region where the recess and the projection overlap when viewed from the rotational-axis direction of the wheel.

In the above configuration, the wheel has a flange portion formed at one end of the wheel tread in the rotational-axis direction of the wheel. The vibration isolating material is disposed at least on the side opposite to the flange portion in the rotational-axis direction of the wheel.

In the above configuration, the vibration isolating material is further provided close to the flange portion in the rotational-axis direction of the wheel. The vibration isolating material disposed on the side opposite to the flange portion has the thickness T1 in the rotational-axis direction of the wheel. The vibration isolating material disposed close to the flange portion has the thickness T2 in the rotational-axis direction of the wheel, and the thickness T1 is equal to or greater than the thickness T2.

In the above configuration, the shoe head and the brake shoe extend along the rotational direction of the wheel, and the recess is formed at both ends of the shoe head in the rotational direction of the wheel.

In the above configuration, the recess of the shoe head opens in the rotational direction of the wheel.

In the above configuration, the vibration isolating material is disposed between the recess and the projection in the region where the recess and the projection overlap when viewed from the rotational direction of the wheel.

In the above configuration, the shoe head and the brake shoe extend along the rotational direction of the wheel, and the recess is formed at a central portion of the shoe head in the rotational direction of the wheel.

Another aspect of invention provides a railway brake shoe for braking a wheel having a wheel tread formed on an outer peripheral surface thereof, the brake shoe having a friction surface configured to be pressed against the wheel tread. The railway brake shoe includes a projection configured to be fitted into a recess formed in a shoe head that supports the railway brake shoe. A vibration isolating material is provided between the recess and the projection in a region where the recess and the projection overlap when viewed from a direction intersecting a radial direction of the wheel.

With this configuration, vibration of the shoe head and the railway brake shoe in the directions intersecting the radial direction of the wheel, in other words, in the rotational-axis direction and the rotational direction of the wheel, can be absorbed. Thus, noise generated by the railway brake shoe can be suppressed.

Yet another aspect of the invention provides a railway shoe head for supporting a brake shoe for braking a wheel that has a wheel tread formed on an outer peripheral surface thereof, the brake shoe having a friction surface configured to be pressed against the wheel tread. The railway shoe head includes a recess into which a projection of the brake shoe supported by the railway shoe head is fitted. A vibration isolating material is provided between the recess and the projection in a region where the recess and the projection overlap when viewed from a direction intersecting a radial direction of the wheel.

With this configuration, vibration of the railway brake shoe head and shoe in the directions intersecting the radial direction of the wheel, in other words, in the rotational-axis direction and the rotational direction of the wheel, can be absorbed. Thus, noise generated by the railway shoe head can be suppressed.

### ADVANTAGEOUS EFFECTS

According to the above aspects of the invention, the railway braking device, the railway brake shoe, and the railway shoe head can further reduce the noise of the railway braking device.

### BRIEF DESCRIPTION OF THE DRAWINGS

Fig. 1 is a perspective view of a braking device relating to one embodiment of the present invention.
Fig. 2 is a sectional view along a line II-II in Fig. 1.
Fig. 3 is a plan view of a shoe head relating to the embodiment of the invention.
Fig. 4 schematically illustrates a contact surface between a wheel tread and a brake shoe.

### DESCRIPTION OF THE EMBODIMENTS

The embodiments of the present invention will be hereinafter described with reference to the drawings. The following description of the embodiments will be based on a braking device for a railway vehicle. In the drawings used for the following description, members are shown to different scales into recognizable sizes.

### <Braking device>

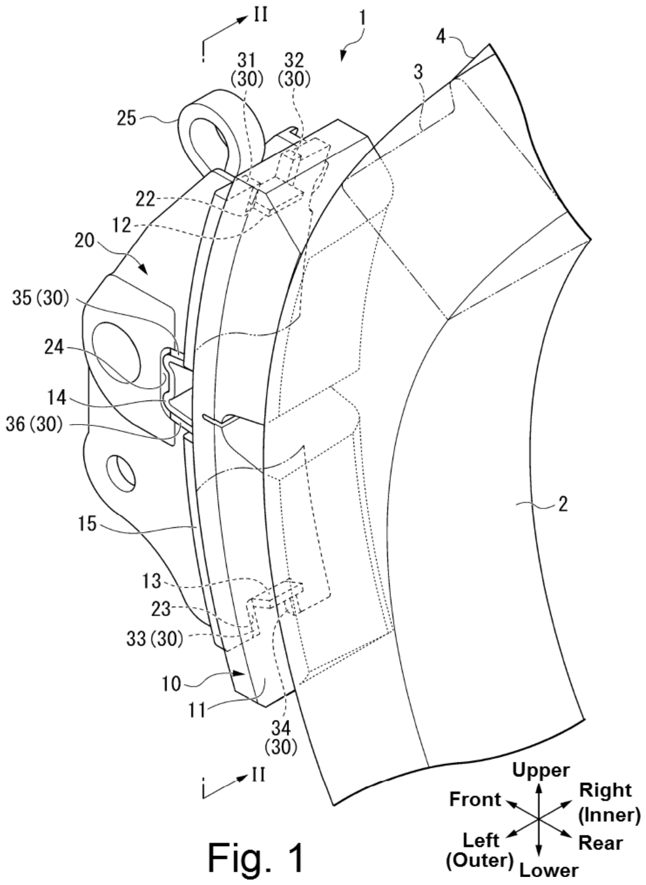

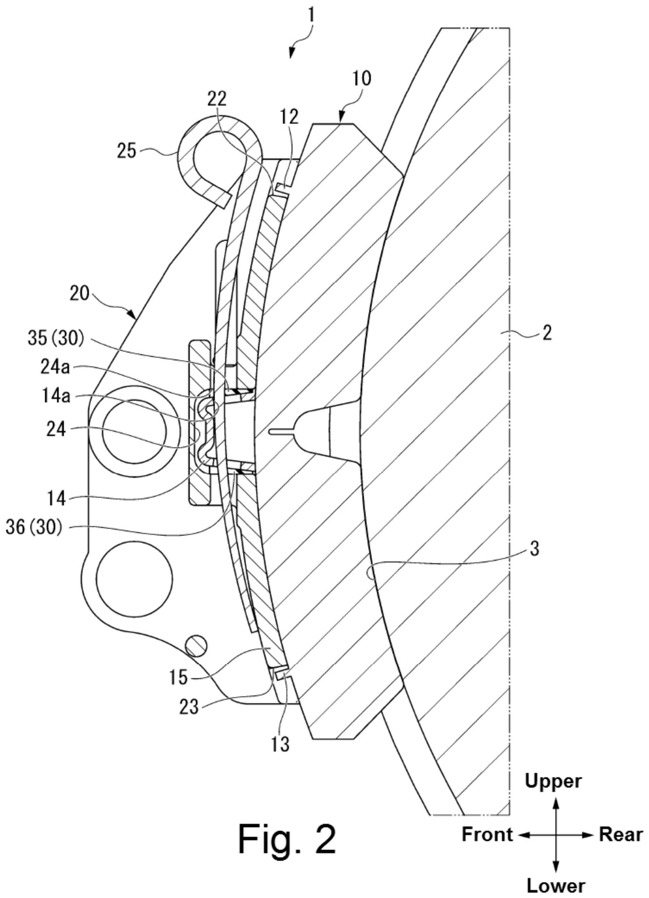

Fig. 1 is a perspective view of a braking device 1 relating to one embodiment of the present invention. Fig. 2 is a sectional view along the line II-II in Fig. 1. The braking device (railway braking device) 1 is provided on a body of a railway vehicle (not shown) and applies a braking force to a wheel 2. As shown in Figs. 1 and 2, the braking device 1 includes a brake shoe (railway brake shoe) 10, a shoe head (railway shoe head) 20, and a shoe cotter 25. The brake shoe 10 is pressed against the wheel 2. The shoe head 20 supports the brake shoe 10. The shoe cotter 25 is used to attach the brake shoe 10 to the shoe head 20.

In the following description, unless otherwise specified, the terms relating to directions such as front, rear, left and right are to be understood as corresponding to the directions of the vehicle described below. Arrows indicating the vertical direction of the vehicle, the lateral direction of the vehicle, and the longitudinal direction of the vehicle are shown in the drawings referred in the following description. Furthermore, unless otherwise specified, the front and rear in the longitudinal direction of the vehicle may simply be referred to as "front" and "rear." Similarly, the upper and lower in the vertical direction of the vehicle may simply be referred to as "upper" and "lower." Likewise, the left and right in the lateral direction of the vehicle may simply be referred to as "left" and "right." In addition, in the following description, the right side of the braking device 1 in the lateral direction of the vehicle may be referred to as the inner side in the vehicle width direction, and the left side in the lateral direction of the vehicle may be referred to as the outer side in the vehicle width direction.

The wheel 2 includes a wheel tread 3 and a flange portion 4. The wheel tread 3 is a surface that comes into contact with a rail. The flange portion 4 is formed to extend from the wheel tread 3 to an inner peripheral edge of the wheel tread 3 in the vehicle width direction. The wheel 2 is inclined radially inward of the wheel 2 as it extends outward in the vehicle width direction. The rotational direction of the wheel 2, when viewed in the vehicle width direction, is a direction of rotation that is either clockwise or counter-clockwise.

The braking device 1 is a tread brake. The tread brake brakes the vehicle by pressing a friction surface of the tread brake against the wheel tread 3 of the wheel 2. In this embodiment, the braking device 1 is provided on the front side of the wheel 2. It should be noted that the braking device 1 only needs to be in contact with the wheel tread 3, and may alternatively be provided on the rear side, the upper side, or at any other positions of the wheel 2.

### <Brake Shoe>

The brake shoe 10 is a member that decelerates the wheel 2 by pressing a friction material 11 against the wheel tread 3. The brake shoe 10 extends in the vertical direction along the shape of the wheel tread 3. The brake shoe 10 is formed, for example, of a material including cast iron or synthetic resin, formulated according to the application. The brake shoe 10 includes the friction material 11 and a backing plate 15. The friction material 11 is provided so as to face the wheel tread 3 of the brake shoe 10. The backing plate 15 is provided on the side opposite to the friction material 11 in the longitudinal direction. The friction material 11 generates braking force by friction when pressed against the wheel tread 3. The friction material 11 is formed in an arcuate shape along the shape of the wheel tread 3. At the central portion of the friction material 11 in the vertical direction, a groove penetrating in the vehicle width direction is formed.

The backing plate 15 is disposed on the side opposite to the surface where the friction material 11 and the wheel tread 3 come into contact. The backing plate 15 is a plate that fixes the friction material 11. The backing plate 15 is formed in an arcuate shape similarly to the shape of the friction material 11. The backing plate 15 includes a first stopper (projection) 12, a second stopper (projection) 13, and a mounting plate (projection) 14. Hereinafter, the first stopper 12 and the second stopper 13 may be collectively referred to as the stoppers 12, 13.

The stoppers 12, 13 are members for fixing the brake shoe 10 to the shoe head 20. The stoppers 12, 13 are disposed at the ends of the brake shoe 10 in the vertical direction (the rotational direction of the wheel 2). The first stopper 12 is provided on the upper side of the backing plate 15 at a central position in the vehicle width direction. The second stopper 13 is provided on the lower side of the backing plate 15 at a central position in the vehicle width direction. Each of the stoppers 12, 13 is a plate-shaped member that projects forward from the backing plate 15. The stopper 12 is a projection that fits into a first stopper recess 22 of the shoe head 20, which will be described later. The stopper 13 is a projection that fits into a second stopper recess 23 of the shoe head 20, which will be described later. The stoppers 12, 13 function as members for positioning the brake shoe 10 relative to the shoe head 20 in the vehicle width direction. It should also be noted that the term "end portion" as used herein is not limited strictly to the extreme end, but also includes the vicinity of the end.

The mounting plate 14 is provided on the front side of the backing plate 15 at a central position in the vertical direction. The mounting plate 14 is a plate-shaped member having an M-shaped profile when viewed from the side. The mounting plate 14 is attached to the backing plate 15 by welding. The mounting plate 14 is a projection that fits into a mounting-plate recess 24 of the shoe head 20, which will be described later. The mounting plate 14 functions as a member for positioning the brake shoe 10 relative to the shoe head 20 in the vertical direction.

### <Shoe Head>

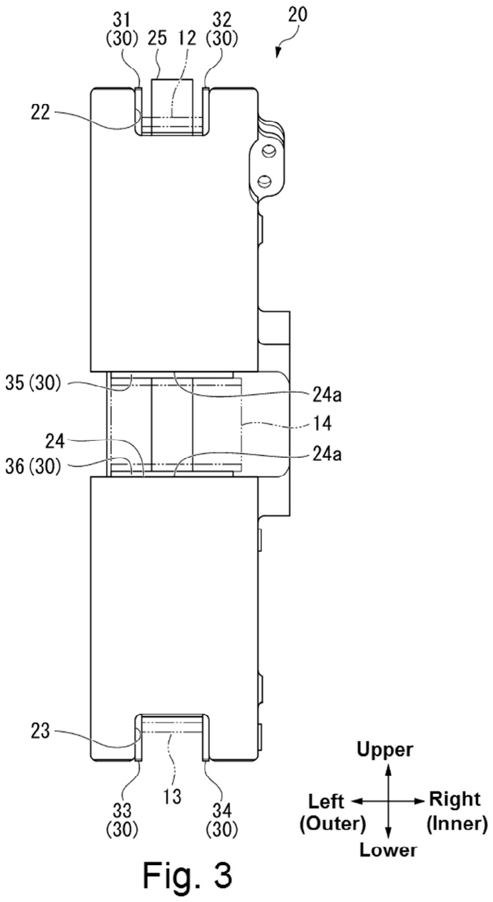

Fig. 3 is a plan view of the shoe head 20 relating to the embodiment of the invention. As shown in Figs. 1 to 3, the shoe head 20 is disposed on the front side of the brake shoe 10. The shoe head 20 fixes the brake shoe 10 from the front side. The shoe head 20 is formed in a blockish shape extending in the vertical direction along the shape of the backing plate 15 of the brake shoe 10. The contact surface between the shoe head 20 and the brake shoe 10 is formed in a curved shape corresponding to the shape of the backing plate 15. The shoe head 20 transmits braking force from a brake cylinder or the like (not shown) to the brake shoe 10. The shoe head 20 includes the first stopper recess (recess) 22, the second stopper recess (recess) 23, and the mounting-plate recess (recess) 24. Hereinafter, the first stopper recess 22 and the second stopper recess 23 may be collectively referred to as the stopper recesses 22, 23.

The stopper recess 22 is a recess into which the stopper 12 of the brake shoe 10 fits. The stopper recess 23 is a recess into which the stopper 13 of the brake shoe 10 fits. Each of the stopper recesses 22, 23 is provided on the contact-surface side facing the brake shoe 10. The stopper recesses 22, 23 are formed at the ends of the shoe head 20 in the vertical direction (the rotational direction of the wheel 2). The first stopper recess 22 is provided at a central position in the vehicle width direction on the upper side. The first stopper recess 22 is open toward the upper side. The second stopper recess 23 is provided at a central position in the vehicle width direction on the lower side. The second stopper recess 23 is open toward the lower side. The stoppers recesses 22, 23 function as recessed portions for positioning the brake shoe 10 relative to the shoe head 20 in the vehicle width direction. A vibration isolating member 30 is provided on inner surfaces of the stopper recesses 22, 23.

The mounting-plate recess 24 is provided at a central position in the vertical direction on the contact-surface side between the mounting-plate recess 24 and the brake shoe 10. The mounting-plate recess 24 is open toward the rear side. The mounting-plate recess 24 is a recess into which the mounting plate 14 of the brake shoe 10 is fitted. The mounting-plate recess 24 functions as a recessed portion for positioning the brake shoe 10 relative to the shoe head 20 in the vertical direction. The vibration isolating member 30 is provided on an inner surface of the mounting-plate recess 24. The shoe head 20 having such a structure is attached to the brake shoe 10 by means of the shoe cotter 25.

### <Shoe Cotter>

The shoe cotter 25 is an L-shaped member that extends along the shapes of the brake shoe 10 and the shoe head 20. An opening 14a is formed in the mounting plate 14. An opening 24a is formed in the mounting-plate recess 24. The shoe cotter 25 is inserted into the openings 14a and 24a. The openings 14a and 24a are holes that extend through in the vertical direction. The brake shoe 10 is attached to the shoe head 20 by inserting the shoe cotter 25 into the opening 14a of the brake shoe 10 and the opening 24a of the shoe head 20.

### <Vibration Isolating Member>

The vibration isolating members 30 function as members for protecting transmission of vibration.

The vibration isolating members 30 include vibration isolating materials 31, 32, 33, 34, 35, and 36. The vibration isolating member 30 is formed of a rubber material that suppresses vibration between the brake shoe 10 and the shoe head 20. The plurality of vibration isolating materials constituting the vibration isolating members 30 are adhered to the inner surfaces of the stopper recesses 22, 23 and the mounting-plate recess 24 of the shoe head 20. Hereinafter, mainly with reference to Fig. 3, the arrangement of the vibration isolating materials 31, 32, 33, 34, 35, and 36 will be described.

The vibration isolating material 31 is provided on the outer side surface in the vehicle width direction between the first stopper 12 and the first stopper recess 22. The vibration isolating material 32 is provided on the inner side surface in the vehicle width direction between the first stopper 12 and the first stopper recess 22. The vibration isolating material 33 is provided on the outer side surface in the vehicle width direction between the second stopper 13 and the second stopper recess 23. The vibration isolating material 34 is provided on the inner side surface in the vehicle width direction between the second stopper 13 and the second stopper recess 23. Thus, the vibration isolating materials 31, 32, 33, and 34 are provided, when viewed in the vehicle width direction (the rotational-axis direction of the wheel 2), in regions where the stopper recesses 22, 23 and the stoppers 12, 13 overlap.

The vibration isolating material 35 is provided on the upper side surface between the mounting plate 14 and the mounting-plate recess 24. The vibration isolating material 36 is provided on the lower side surface between the mounting plate 14 and the mounting-plate recess 24. Thus, the vibration isolating materials 35 and 36 are provided, when viewed in the vertical direction (the rotational direction of the wheel 2), in regions where the mounting-plate recess 24 and the mounting plate 14 overlap.

The vibration isolating material 31 has a greater thickness in the vehicle width direction than the vibration isolating material 32. Similarly, the vibration isolating material 33 has a greater thickness in the vehicle width direction than the vibration isolating material 34.

It should be noted that the vibration isolating members 30 are not necessarily disposed at the above-described positions. For example, the vibration isolating member 30 may be provided in regions where, when viewed in a direction intersecting the radial direction of the wheel 2, the stopper recesses 22, 23 and the stoppers 12, 13 overlap each other respectively, and regions where the mounting-plate recess 24 and the mounting plate 14 overlap each other.

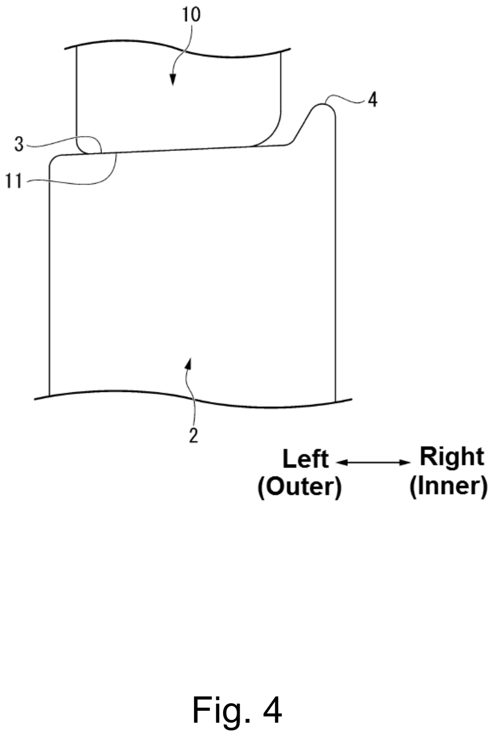

It is preferable that all of the vibration isolating materials 31, 32, 33, and 34 be provided; however, it is sufficient that at least the vibration isolating materials 31 and 33, which are disposed on the side opposite to the flange portion 4 of the wheel 2, be provided, and the vibration isolating materials 32 and 34 need not necessarily be provided. The reason for this will be explained below. Fig. 4 schematically illustrates the contact surface between the wheel tread 3 and the brake shoe 10. Referring to Fig. 4, the wheel tread 3 is inclined radially inward of the wheel 2 as the wheel tread 3 extends from the flange portion 4 toward the outer side in the vehicle width direction. Thus, the brake shoe 10 tends to move toward the side opposite to the flange portion 4 on the wheel tread 3. As a result, vibration between the brake shoe 10 and the shoe head 20 is more likely to occur on the side opposite to the flange portion 4 of the wheel 2. Therefore, it is preferable that the vibration isolating member 30 be provided on the side opposite to the flange portion 4 of the wheel 2. For the same reason, it is also preferable that the vibration isolating member 30 provided on the side opposite to the flange portion 4 have a greater thickness. The vibration isolating materials 31 and 33 provided on the side opposite to the flange portion 4 have a thickness T1 in the rotational-axis direction of the wheel, and the vibration isolating materials 32 and 34 provided close to the flange portion 4 have a thickness T2 in the rotational-axis direction of the wheel. The thickness T1 is equal to or greater than the thickness T2.

As described above, in the braking device 1 of the embodiment, the vibration isolating members 30 are provided in the regions where, when viewed in the direction intersecting the radial direction of the wheel 2, the recesses 22, 23, and 24 and the projections 12, 13, and 14 overlap. With this configuration, vibration of the shoe head 20 and the brake shoe 10 in the directions intersecting the radial direction of the wheel 2, in other words, in the rotational-axis direction and the rotational direction of the wheel 2, can be absorbed by utilizing the inner surfaces of the stopper recesses 22, 23 and the outer surfaces of the stoppers 12, 13. Conventional vibration isolating materials could absorb only vibration in the radial direction, and therefore had limitations in noise reduction. Whereas the vibration isolating member 30 of the embodiment can absorb vibration, for example, in the rotational-axis direction and the rotational direction of the wheel 2. Thus, vibration in all directions can be absorbed. Thus, noise generated by the braking device 1 can be further reduced.

In the braking device 1 of the present embodiment, the vibration isolating materials 31, 32, 33, and 34 are provided in the regions where the stopper recesses 22, 23 and the stoppers 12, 13 overlap when viewed in the rotational-axis direction of the wheel 2. With this configuration, vibration of the shoe head 20 and the brake shoe 10 in the rotational-axis direction of the wheel 2 can be absorbed. Thus, noise generated by the braking device 1 can be suppressed.

In the braking device 1 of the embodiment, the vibration isolating materials 31 and 33 are provided at least on the side opposite to the flange portion 4 of the wheel 2 in the rotational-axis direction. The wheel tread 3 is inclined inward in the radial direction of the wheel 2 as it extends toward the outer side in the rotational-axis direction from the flange portion 4. Therefore, the brake shoe 10 tends to move toward the side opposite to the flange portion 4 on the wheel tread 3. With this configuration, vibration of the shoe head 20 and the brake shoe 10 can be absorbed at least on the side opposite to the flange portion 4 of the wheel 2. Thus, noise generated by the braking device 1 can be suppressed.

Furthermore, in the braking device 1 of the embodiment, the vibration isolating materials 31 and 33 disposed on the side opposite to the flange portion 4 have the thickness T1 in the rotational-axis direction of the wheel 2, and the vibration isolating materials 32 and 34 disposed close to the flange portion 4 have the thickness T2 in the rotational-axis direction of the wheel 2. The thickness T1 is equal to or greater than the thickness T2. With this configuration, the vibration isolating materials 31 and 33 located on the side opposite to the flange portion 4, where the brake shoe 10 tends to move more easily, have a greater thickness. Therefore, at least on the side opposite to the flange portion 4 of the wheel 2, vibrations of the shoe head 20 and the brake shoe 10 can be absorbed. Thus, noise generated by the braking device 1 can be reduced.

In the braking device 1 of the embodiment, the shoe head 20 and the brake shoe 10 extend along the rotational direction of the wheel 2, and the stopper recesses 22 and 23 are formed at both ends of the shoe head 20 in the rotational direction of the wheel 2. At both ends, in the rotational direction of the wheel 2, of the braking device 1, vibrations caused by whirling during braking become larger than those at the central portion in the rotational direction. With this configuration, vibrations of the shoe head 20 and the brake shoe 10 can be absorbed more effectively at both ends in the rotational direction of the wheel 2. Thus, noise of the braking device 1 can be reduced.

In the braking device 1 of the embodiment, the stopper recesses 22 and 23 open in the rotational direction of the wheel 2. With this configuration, since the inner surfaces of the stopper recesses 22 and 23 are visible from the rotational direction of the wheel 2, the stoppers 12 and 13 of the brake shoe 10 and the vibration isolating materials 31, 32, 33, and 34 can be easily placed.

In the braking device 1 of the embodiment, the vibration isolating materials 35 and 36 are provided in the region where the mounting-plate recess 24 and the mounting plate 14 overlap when viewed in the rotational direction of the wheel 2. With this configuration, vibrations of the shoe head 20 and the brake shoe 10 in the rotational direction of the wheel 2 can be absorbed. Thus, noise generated by the braking device 1 can be suppressed.

In the braking device 1 of the embodiment, the shoe head 20 and the brake shoe 10 extend along the rotational direction of the wheel 2, and the mounting-plate recess 24 is formed at the central portion of the shoe head 20 in the rotational direction of the wheel 2. At the central portion of the shoe head 20 and the brake shoe 10 in the rotational direction, sufficient space can be secured, allowing the mounting-plate recess 24 and the mounting plate 14 to be formed larger. Accordingly, a larger area can be secured for placing the vibration isolating materials 35 and 36. Furthermore, by providing the mounting-plate recess 24 and the mounting plate 14 at the central portion of the shoe head 20 and the brake shoe 10, elastic deformation occurs toward the side facing away from the wheel tread 3 during braking of the wheel 2. As a result, the brake shoe 10 can be pressed more firmly against the wheel tread 3. Thus, vibrations of the shoe head 20 and the brake shoe 10 can be absorbed, and noise of the braking device 1 can be reduced.

In the brake shoe 10 of the embodiment, the vibration isolating members 30 are provided in the regions where the recesses 22, 23, and 24 and the projections 12, 13, and 14 overlap when viewed from the direction intersecting the radial direction of the wheel 2. Thus, the vibration isolating members 30 can suppress vibrations of the brake shoe 10 and the shoe head 20 in both the rotational-axis direction and the rotational direction of the wheel 2. Consequently, noise generated by the brake shoe 10 can be reduced.

In the shoe head 20 of the embodiment, the vibration isolating members 30 are also provided in the regions where the recesses 22, 23, and 24 and the projections 12, 13, and 14 overlap when viewed from the direction intersecting the radial direction of the wheel 2. Accordingly, the vibration isolating members 30 can suppress vibrations of the brake shoe 10 and the shoe head 20 in both the rotational-axis direction and the rotational direction of the wheel 2. Thus, noise generated by the shoe head 20 can be reduced.

The embodiments described herein are not intended to necessarily limit the present invention to any specific embodiments. Various modifications can be made to these embodiments without departing from the true scope and spirit of the present invention.

The foregoing embodiments disclosed herein describe a plurality of physically separate constituent parts. They may be combined into a single part, and any one of them may be divided into a plurality of physically separate constituent parts. Irrespective of whether or not the components are integrated, they are acceptable as long as they are configured to attain the object of the invention.

### LIST OF REFERENCE NUMBERS

1 ... braking device (railway braking device), 2 ... wheel, 3 ... wheel tread, 4 ... flange portion, 10 ... brake shoe (railway brake shoe), 12 ... first stopper (projection), 13 ... second stopper (projection), 14 ... mounting plate (projection), 20 ... shoe head (railway shoe head), 22 ... first stopper recess (recess), 23 ... second stopper recess (recess), 24 ... mounting-plate recess (recess), 30 ... vibration isolating member, 31, 32, 33, 34, 35, 36 ... vibration isolating material

## Claims

1. A railway braking device for braking a wheel having a wheel tread formed on an outer peripheral surface thereof, the railway braking device comprising:
a brake shoe having a friction surface configured to be pressed against the wheel tread; and
a shoe head supporting the brake shoe and having a recess,
wherein the brake shoe has a projection that fits into the recess, and
wherein a vibration isolating material is provided between the recess and the projection in a region where the recess and the projection overlap when viewed from a direction intersecting a radial direction of the wheel.

2. The railway braking device of claim 1, wherein the vibration isolating material is disposed between the recess and the projection in a region where the recess and the projection overlap when viewed from a rotational-axis direction of the wheel.

3. The railway braking device of claim 2, wherein the wheel has a flange portion formed at one end of the wheel tread in the rotational-axis direction of the wheel, and
wherein the vibration isolating material is disposed at least on a side opposite to the flange portion in the rotational-axis direction of the wheel.

4. The railway braking device of claim 3, wherein the vibration isolating material is further provided close to the flange portion in the rotational-axis direction of the wheel,
wherein the vibration isolating material disposed on the side opposite to the flange portion has a thickness T1 in the rotational-axis direction of the wheel,
wherein the vibration isolating material disposed close to the flange portion has a thickness T2 in the rotational-axis direction of the wheel, and
wherein the thickness T1 is equal to or greater than the thickness T2.

5. The railway braking device of any one of claims 2 to 4, wherein the shoe head and the brake shoe extend along the rotational direction of the wheel, and
wherein the recess is formed at both ends of the shoe head in the rotational direction of the wheel.

6. The railway braking device of claim 5, wherein the recess of the shoe head opens in the rotational direction of the wheel.

7. The railway braking device of claim 1, wherein the vibration isolating material is disposed between the recess and the projection in a region where the recess and the projection overlap when viewed from a rotational direction of the wheel.

8. The railway braking device of claim 7, wherein the shoe head and the brake shoe extend along the rotational direction of the wheel, and
wherein the recess is formed at a central portion of the shoe head in the rotational direction of the wheel.

9. A railway brake shoe for braking a wheel having a wheel tread formed on an outer peripheral surface thereof, the brake shoe having a friction surface configured to be pressed against the wheel tread,
the railway brake shoe comprising a projection configured to be fitted into a recess formed in a shoe head that supports the railway brake shoe,
wherein a vibration isolating material is provided between the recess and the projection in a region where the recess and the projection overlap when viewed from a direction intersecting a radial direction of the wheel.

10. A railway shoe head for supporting a brake shoe for braking a wheel that has a wheel tread formed on an outer peripheral surface thereof, the brake shoe having a friction surface configured to be pressed against the wheel tread, the railway shoe head comprising:
a recess into which a projection of the brake shoe supported by the railway shoe head is fitted,
wherein a vibration isolating material is provided between the recess and the projection in a region where the recess and the projection overlap when viewed from a direction intersecting a radial direction of the wheel.
